# EUROPÄISCHE PATENTSCHRIFT

(11) **EP 2 226 646 B1**
(45) Veröffentlichungstag und Bekanntmachung des Hinweises auf die Patenterteilung: **11.11.2015**
(21) Anmeldenummer: 10002089.0
(22) Anmeldetag: 02.03.2010
(51) Int. Cl.: G01S 5/02, H04W 64/00

(54) **Ortungssystem**
Position finding system
Système de localisation

(30) Priorität: 02.03.2009 AT 3372009
(43) Veröffentlichungstag der Anmeldung: 08.09.2010
(73) Patentinhaber: MKW electronics GmbH, 4675 Weibern (AT)
(72) Erfinder:

(56) Entgegenhaltungen:
- WO-A2-02/054100
- WO-A2-2007/146818
- WO-A2-2008/115209
- US-A1- 2005 141 465
- US-A1- 2006 172 699
- US-A1- 2008 112 699
- "Part 15.4: Wireless Medium Access Control (MAC) and Physical Layer (PHY) Specifications for Low-Rate Wireless Personal Area Networks (WPANs), Amendment 1: Add Alternate PHYs"; "15.4a" In: IEEE: "IEEE standard for information technology - Telecommunications and information exchange between systems - Local and metropolitan area networks - Specific requirements" 31. August 2007 (2007-08-31), IEEE , New York , XP002587647 ISBN: 0-7381-5583-5 * Seite 8 - Seite 20 * * Seite 113 - Seite 115 * * Seite 121 - Seite 138 *

## Beschreibung

Die Erfindung betrifft ein System zur Lagebestimmung eines Objektes in Echtzeit innerhalb eines Raumes, in dem sich eine Mehrzahl von Objekten befinden, mit einer Mehrzahl von Sende- und Empfangsmodulen, wobei jedes Objekt mit einem Sende- und Empfangsmodul versehen ist, und die Sende- und Empfangsmodule zu einem drahtlosen Netzwerk verbunden sind, und wobei zumindest eines der Sende- und Empfangsmodule einen Zentralankerknoten mit definierter Lage bildet, und die restlichen Sende- und Empfangsmodule zu ortende Knoten sind, und mit einer Basisstation, an die Daten von den Sende- und Empfangsmodulen übermittelt werden, wobei die Basisstation gegebenenfalls durch den Zentralankerknoten gebildet ist, weiters die Verwendung dieses Systems sowie ein Verfahren zur Ortung eines Objektes in Echtzeit innerhalb eines Raumes, in dem sich eine Mehrzahl an Objekten befindet, wobei jedes Objekt mit einem Sende- und Empfangsmodul versehen ist, und die Sende- und Empfangsmodule zu einem drahtlosen Netzwerk verbunden werden, wobei zumindest eines der Sende- und Empfangsmodule als Zentralankerknoten mit definierter Lage bestimmt wird und wobei die restlichen Sende- und Empfangsmodule zu ortende Knoten sind.

Einführend sei festgehalten, dass unter einem Objekt im Sinne der Erfindung sowohl Gegenstände an sich als auch Menschen bzw. Tiere verstanden werden.

Für das Auffinden von Objekten werden diese üblicherweise mit einem Sender versehen, der in der Regel drahtlos mit einer Basisstation kommuniziert und so periodisch oder nach Abfrage durch die Basisstation entsprechenden Daten sendet. Dazu ist es erforderlich, dass in einem vordefinierbaren Raum mehrere lagefixierte Ankerknoten vorgesehen werden, um in einem kartesischen Koordinatensystem einen Koordinatenbestimmung des Objektes vornehmen zu können. In der Regel werden dazu an Eckpunkten des Raumes die Ankerknoten vorgesehen, wodurch dieser Raum genau definierte Begrenzungslinien aufweist. Problematisch wird es allerdings, wenn dieser Raum, in dem sich die Objekte aufhalten bzw. befinden, nicht mehr genau definierbar ist, also es sich um einen variablen Raum handelt, beispielsweise bei freilaufenden Herden.

US 2005/0141465 A1 zeigt die Verwendung eines Systems entsprechend dem einleitenden Teil von Anspruch 1.

Das eingangs genannten System zur Lagebestimmung eines Objek-tes ist ein System bei dem jedes der Sende- und Empfangsmodule wahlweise als Ankerknoten mit definierter Lage oder zu ortender Knoten schaltbar ist, sowie eigenständig durch das Verfahren zur Ortung eines Objektes bei dem für die Ortung des Objektes zumindest eines der restlichen Sende- und Empfangsmodule, das nicht an dem Objekt angeordnet ist, als weitere Ankerknoten geschaltet wird.

Von Vorteil ist dabei, dass durch die Möglichkeit der wechselnden Eigenschaften der Sende-und Empfangsmodule diese jederzeit als weitere Ankerknoten zusätzlich zum Zentralankerknoten aktiviert werden können. Aufgrund der automatischen Einmessung dieser Ankerknoten hinsichtlich ihrer Koordinaten in Relation zum Zentralankerknoten ist es nicht mehr erforderlich den Raum fix zu definieren, sondern kann damit der Raum in dem sich die Objekte befinden können, variabel gestaltet werden. Dies ist insbesondere von Vorteil von wandernden Herden von Tieren, beispielsweise auf Almen.

Ein weiterer Vorteil dieses Systems bzw. Verfahrens liegt darin, dass bei Ausfall eines Sende-und Empfangsmoduls, welches im Zeitpunkt des Ausfalls als Ankerknoten geschaltet war, jederzeit ein weiteres Sende- und Empfangsmodul, welches zu diesem Zeitpunkt ein zu ortender Knoten war, als Ankerknoten geschaltet werden kann, sodass der Ausfall dieses einen Sende- und Empfangsmoduls keinen Ausfall des Systems an sich nach sich zieht.

Die Sende- und Empfangsmodule sind als Funkmodule ausgebildet. Es wird damit der Vorteil erreicht, dass das System bzw. das Verfahren nicht nur in offenen Räumen, also in freier Natur, sondern auch in geschlossenen Räumen im Vergleich zu GPS-Systemen mit höherer Sicherheit verwendet werden kann. Es ist damit beispielsweise auch eine höhere Sicherheit des Systems im Wald oder in Bergspalten erzielbar.

Es sei an dieser Stelle erwähnt, dass unter den Begriff "Raum" entsprechend den voranstehenden Ausführungen nicht zwangsweise ein in sich geschlossener Raum, wie zum Beispiel als Stall, verstanden wird, sondern kann dieser Raum durch die variablen Ankerknoten völlig frei definierbar und damit auch ein "imaginärer" im Freien sein kann.

Die Sende- und Empfangsmodule können als Clip ausgebildet sein. Es wird damit der Vorteil erreicht, dass diese Sende- und Empfangsmodule relativ klein sind und somit beispielsweise Tieren injiziert werden können, wodurch die Gefahr des Verlustes reduziert werden kann. Durch diese Platz sparende Ausführung der Sende- und Empfangsmodule wird es auch möglich, kleinere Objekte mit diesem System sinnvoll zu orten, da diese Sende- und Empfangsmodule auch auf derartig kleineren Objekten problemlos angeordnet werden können. Beispielsweise können diese Sende- und Empfangsmodule auch in eine herkömmliche Chipkarte integriert werden.

Bevorzugt sind die Sende- und Empfangsmodule mit einem CSS-Element (Chirp Spread Spectrum Technologie) und/oder einem SDS-TWR-Element (Symmetric Double Sided Two Way Ranging Technologie) ausgestattet. Mit Hilfe dieser bereits bekannten Technologien ist es möglich, die Sende- und Empfangsmodule energiesparend bei hoher Datenübertragungsrate und mit hoher Sicherheit der Datenübertragung an sich zu betreiben, sodass die Ausfallsicherheit des Systems erhöht werden kann. Durch die Verwendung eines SDS-TWR- Elementes ist es auch nicht erforderlich, dass die Ankerknoten synchronisiert werden.

Bevorzugt sind die Sende- und Empfangsmodule energieautark ausgebildet, sodass also eine kabelgebundene Nachladung mit elektrischer Energie nicht erforderlich ist und damit das System über einen langen Zeitraum völlig wartungslos betrieben werden kann.

Dabei ist es von Vorteil, wenn die Sende- und Empfangsmodule mit einem piezo-elektrischen Element und/oder einem thermoelektrischen Element und/oder einer Foto- oder Solarzelle ausgerüstet sind, um diese energieautarke Ausstattung der Sende- und Empfangsmodule zu erreichen, da derartige Elemente bereits seit langem technisch verwendet werden und eine hohe Sicherheit bezüglich der Energielieferung aufweisen.

Wie bereits erwähnt können die Sende- und Empfangmodule ortsunabhängig angeordnet sein, sodass also hinsichtlich des Raumes, in dem sich zu ortenden Objekte befinden können, mit Ausnahme der Reichweite der Sendeleistung, keinerlei Beschränkungen ergeben.

Es besteht weiters die Möglichkeit, dass die Sende- und Empfangsmodule ein Speicherelement aufweisen, sodass in diesen Sende- und Empfangsmodulen Daten gespeichert werden können. Beispielsweise können entsprechende Daten zur Vitalität von Tieren gespeichert werden oder bezüglich der Fütterung dieser Tiere. Für das Auslesen der Daten muss in weiterer Folge daher kein Kontakt zu der Basisstation hergestellt werden, da diese Daten eben bereits auf den Sende- und Empfangsmodulen individuell für das jeweilige Objekt abgespeichert sind und damit beispielsweise die Fütterung von Tieren entsprechend besser steuerbar ist. Wird beispielsweise bei der Fütterung von Tieren in oder an einer Fütterungsbox ein Ankerknoten angebracht bzw. ein Knoten zu diesem definiert, so besteht die Möglichkeit, dass das Futter nur für jenes Tier von der Fütterungsbox bereit gestellt wird, welches sich am nächsten befindet, für die anderen Tiere soll das Futter hingegen nicht erreichbar sein. Es kann damit gewährleistet werden, dass ein Tier ausreichend gefüttert wird. Auch bei der Zutrittskontrolle zu bestimmten Bereichen, z.B. bei Schiliften, ist es von Vorteil, wenn Daten direkt auf dem Sende- und Empfangsmodul gespeichert werden können.

Es ist vorgesehen, dass die Umschaltung des Sende- und Empfangsmoduls von einem zu ortenden Knoten auf einen Ankerknoten von dem Zentralankerknoten durchgeführt wird. Diese Umschaltung kann dabei dynamisch erfolgen. Wiederum ist dabei von Vorteil, dass für diese Umschaltung kein Kontakt mit der Basisstation erforderlich ist und somit besser auf variierende Gegebenheiten des Raumes reagiert werden kann.

Es ist dabei möglich, dass die Umschaltung durch das Eintreffen eines Alarmsignals im Zentralankerknoten ausgelöst wird. Dieses Alarmsignal kann beispielsweise die fehlende Vitalitätsfunktion eines Tieres, also beispielsweise der Herztätigkeit, sein. Es kann aber anstelle der automatischen Auslösung ein manuell ausgelöstes Alarmsignal sein, beispielsweise bei einem Lawinenunglück, wenn das zu suchende Objekt ein unter der Lawine verschütteter Mensch ist, der noch die Möglichkeit der Alarmauslösung hat.

Wie bereits voranstehend erwähnt, wird die Kommunikation im Netzwerk bevorzugt mit zumindest einer Funkfrequenz durchgeführt, sodass dieses Verfahren auch in geschlossenen Räumen anwendbar ist.

Es kann weiters vorgesehen sein, dass die Ortung eines Knoten bei einer anderen Frequenz durchgeführt wird als die Kommunikation zwischen den Knoten, sodass der Ortungsbetrieb die unter Umständen gleichzeitig stattfindende Kommunikation zwischen den Knoten nicht stört.

Weiters besteht die Möglichkeit, dass zumindest einzelne der Knoten indirekt über einen dazwischen geschalteten Knoten mit dem Zentralankerknoten oder der Basisstation kommunizieren können, wodurch der Vorteil erreicht wird, dass einerseits höhere Reichweiten erzielbar sind und andererseits durch die Kommunikation über andere Knoten bei Ausfall eines Knoten ein anderer noch funktionstüchtiger Knoten für die Datenweiterleitung herangezogen werden kann.

Bevorzugt wird zur Ortung des Objektes die Signalstärke und die Signallaufzeit zwischen dem Sende- und Empfangsmodul des zu ortenden Objektes und dem Zentralankerknoten gemessen. Es ist damit eine genauere Ortung bzw. eine genauere Feststellung der Koordinaten des Objektes möglich. Insbesondere ist es damit möglich, dass durch die zusätzliche Auswertung der Signalstärke "verdeckte" Objekte, z.B. weil sie teilweise durch Metalle oder Flüssigkeiten abgeschirmt sind, sicherer zu lokalisieren. Ebenso können damit fehlerhafte, z.B. durch Reflexionen verursachte Messungen vermieden bzw. aussortiert werden.

Es ist auch möglich, dass die Positionsbestimmung im Zentralankerknoten selbst durchgeführt wird, wodurch die Datenmenge, die zur Basisstation gesendet wird, reduziert werden kann. Insbesondere kann damit vermieden werden, dass Daten aus Fehlmessungen, z.B. aufgrund von Reflexionen, gesendet werden. Zudem kann damit die Rechnerbelastung in der Basisstation reduziert werden. Im Zentralankerknoten kann dazu ein entsprechendes Software-Programm hinterlegt sein.

Die Erfindung betrifft die Verwendung des erfindungsgemäßen Systems zur Unfalldetektion beim Schi fahren,

Die Erfindung ist durch unabhängigen Anspruch 1 definiert.

Zum besseren Verständnis der Erfindung wird diese anhand der nachfolgenden Figuren näher erläutert.

Es zeigen jeweils in stark schematisch vereinfachter Darstellung:
- Fig. 1: ein erfindungsgemäßes System;
- Fig. 2: ein chipförmiges Sende- und Empfangsmodul.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

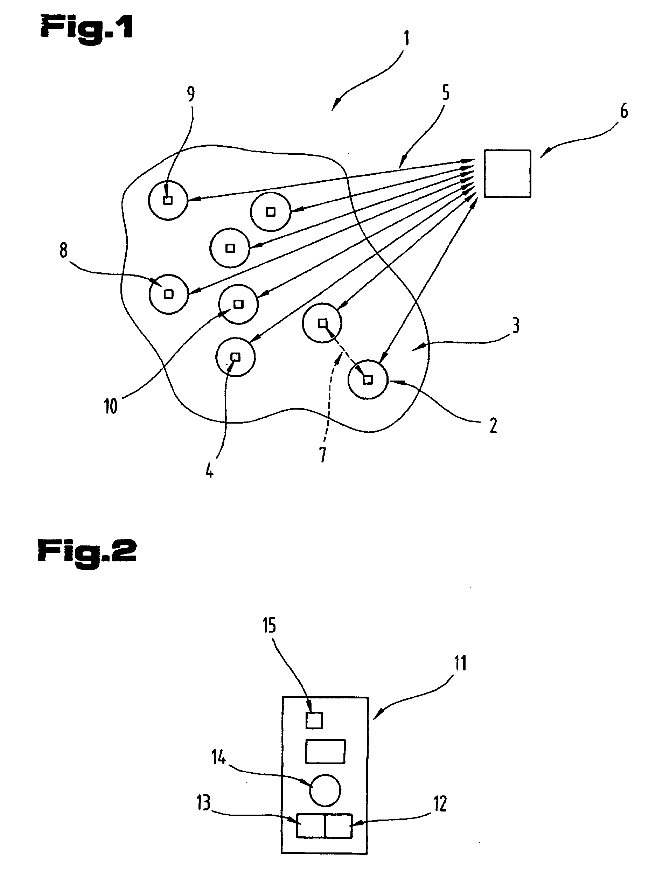

Fig. 1 zeigt ein System 1 zur Lagebestimmung eines Objektes 2 in Echtzeit innerhalb eines Raumes 3. Innerhalb des Raumes 3 befindet sich eine Mehrzahl an Objekten 2, wobei jedes dieser Objekte 2 mit einem Sende- und Empfangsmodul 4 versehen ist. Die Sende- und Empfangsmodule 4 kommunizieren drahtlos, wie dies durch Doppelpfeile 5 angedeutet ist, mit einer Basisstation 6. Daneben können diese Sende- und Empfangsmodule 4 zumindest teilweise miteinander miteinander kommunizieren, wie dies mit einem strichlierten Doppelpfeil 7 in Fig. 1 angedeutet ist. Die Sende- und Empfangsmodule 4 bauen somit ein Netzwerk mit Knoten 8 auf, wobei jedes Sende- und Empfangsmodul 4 bzw. jedes Objekt 2 einen eigenen Knoten 8 darstellt.

Zumindest eines der Objekte 2 bzw. eines der Sende- und Empfangsmodule 4 bildet einen so genannten Zentralankerknoten 9, der genau definierte Koordinaten innerhalb des Raumes 3 besitzt. Die weiteren Objekte 2 bzw. Sende- und Empfangsmodule 4 können auf diesen normierten Zentralankerknoten 9 abgestimmt und entsprechend eingemessen, das heißt ihre Ortskoordinaten, bestimmt werden. Dazu besteht die Möglichkeit, dass zumindest eines der weiteren Sende- und Empfangsmodule 4 einen so genannten Ankerknoten 10 bildet, wobei auch dieser Ankerknoten 10 definierte Koordinaten innerhalb des Raumes 3 aufweist. Die weiteren Objekte 2 bzw. Sende- und Empfangmodule 4 können nun durch Vermessung ihrer relativen Position zum Zentralankerknoten 9 und dem Ankerknoten 10 hinsichtlich ihrer Ortkoordinaten in Echtzeit bestimmt werden. Zur Messung der Ortskoordinaten wird bevorzugt die Signalstärke/Empfangsfeldstärke RSSI (Received Signal Strength Indication) und die Signallaufzeit zwischen dem Zentralankerknoten 9 und dem jeweiligen Objekt 2 bzw. dem Ankerknoten 10 und dem Objekt 2 gemessen. Diese Daten können in der Folge der Basisstation 6 übermittelt und gegebenenfalls dort ausgewertet werden. Es ist aber auch möglich, dass die Positionsbestimmung bereits im Zentralankerknoten 9 durchgeführt wird, indem in diesem entsprechende Programme zur Auswertung hinterlegt sind. Es kann damit die Rechnerbelastung in der Basisstation 6 reduziert werden bzw. kann insgesamt der Datenverkehr zwischen den Knoten bzw. Ankernoten und der Basisstation reduziert werden.

Erläuternd sei ausgeführt, dass unter einem Zentralankerknoten 9 ein Netzwerkknoten mit genau definierten Koordinaten zu verstehen ist, dieser also den "Nullpunkt" für das System bildet. Ein Ankerknoten 10 ist ein weiterer Bezugspunkt zur Bestimmung der Koordinaten der zu ortenden Objekte 2. Dieser weitere Bezugspunkt kann dabei absolut sein mit absoluten Werten der Koordinaten oder relativ in Hinblick auf die Koordinaten zum Zentralankerkoten 9.

Selbstverständlich besteht im Rahmen der Erfindung die Möglichkeit, dass mehr als ein Ankerknoten definiert wird.

Die Basisstation 6 ist dem Stand der Technik entsprechend ausgebildet, umfasst also beispielsweise neben einer Antenne zum Empfang der Datenpakete auch eine Datenverarbeitungsanlage, beispielsweise einen PC, und gegebenenfalls zumindest einen WLAN-Access-Point. Es ist weiters möglich, dass in der Basisstation 9 Speichermodule angeordnet sind bzw. diese Basisstation auf damit verbundene bzw. verbindbare Speichermodule zugreifen kann, sodass Positionsdaten über einen längeren Zeitraum erfasst werden können. Beispielsweise kann eine Datenbank aus den Daten aufgebaut werden, um verschiedenste Auswertungen durchführen zu können.

Die Sende- und Empfangsmodule 4 sind bevorzugt als Funkmodule ausgebildet. Insbesondere können diese Funkmodule über zwei verschiedene Frequenzen bzw. Frequenzbereiche miteinander kommunizieren, wobei einer dieser Frequenzen bzw. Frequenzbereiche für die Ortung eines Objektes 2 verwendet wird und die andere Frequenz bzw. der andere Frequenzbereich für die Kommunikation der Module untereinander bzw. die Kommunikation mit der Basisstation 6. Beispielsweise kann die Lokalisierung der Objekte 2, das heißt deren Ortung, im Bereich von 2,4 GHz erfolgen und die Kommunikation zwischen den Objekten 2 und mit der Basisstation 6 im Bereich von 868 MHz. Es wird damit auch der Vorteil erreicht, dass für die Kommunikation eine höhere Reichweite durch die kleinere Frequenz ermöglicht wird.

Generell sei angemerkt, dass der Raum 3, wie dies aus Fig. 1 ersichtlich ist, beliebig wählbar ist. Die Größe dieses Raumes 3 hängt einerseits von der Sendeleistung der Sende- und Empfangsmodule 4 bzw. der Empfangsqualität der Signale ab und kann andererseits auch von der Anzahl der Objekte 2 im Raum 3 abhängen. Dies insbesondere deswegen, da es möglich ist, dass die Objekte 2 bzw. deren Sende- und Empfangsmodule 4 nicht direkt mit der Basisstation 6 kommunizieren, sondern die Kommunikation mit dieser Basisstation 6 unter Zwischenschaltung anderer Objekte 2 bzw. deren Sende- und Empfangsmodule 4 erfolgt. Es kann also damit mit der Anzahl der Objekte 2 auch der Raum 3 größer werden.

Des Weiteren ist es nicht zwingend erforderlich, dass der Raum 3 völlig unregelmäßig ist. Selbstverständlich besteht auch die Möglichkeit, das erfindungsgemäße System 1 in geschlossenen Räumen, wie zum Beispiel Ställen oder Hallen etc., anzuwenden. Insbesondere für diese Verwendung des Systems 1 ist es von Vorteil Funkmodule als Sende- und Empfangsmodule 4 einzusetzen, da damit ein ungestörter Betrieb und eine ungestörte Datenübertragung innerhalb dieses Raumes 3 erfolgen kann. Die Sende- und Empfangsmodule 4 sind also bevorzugt keine GPS-Module.

In der bevorzugten Ausführung ist das Funkmodul als Chip 11 ausgeführt, wie dies in Fig. 2 dargestellt ist. Dieser Chip 11 weist zumindest ein CSS-Element 12 und/oder zumindest ein SDS-TWR-Element 13 auf.

Das CSS-Element bzw. die CSS-Technologie (Chirp Spread Spectrum Technologie) ist an sich aus anderen Anwendungen bekannt. Es können damit Datenraten von 2 Mbit/s erreicht werden und Reichweiten von beispielsweise 700 m im Freien bzw. 60 m in Gebäuden. Ein weiterer Vorteil dieser Technologie ist, dass der Energieverbrauch äußerst gering ist, beispielsweise 11 mA für den Empfang von Daten bzw. 50 mA für das Senden von Daten. Im Ruhezustand beträgt der Stromverbrauch nur 1 µA. Es reicht hierfür eine Stromversorgung von 2,38 bis 3,6 Volt. Des Weiteren können diese Elemente im Temperaturbereich von -40 °C bis +85 °C betrieben werden.

Da die prinzipielle Funktionsweise dieser Technologie bereits bekannt ist, beispielsweise in der Zeitschrift "Electronic Journal" Februar 2003, Seite 26 bis 28 nachgelesen werden kann und beispielsweise von der Firma Nanotron Technologies, Berlin, bezogen werden kann, wird diesbezüglich auf die einschlägige Literatur verwiesen.

Bei der SDS-TWR-Technologie (Symmetric Double Sided Two Way Ranging Technologie) wird die Entfernung anhand der Laufzeit eines Signals zwischen der Quelle und dem Empfänger, also beispielsweise zwischen zwei Objekten 2 oder zwischen einem Objekt 2 und der Basisstation 6 bzw. dem Zentralankerknoten 9 oder dem Ankerknoten 10 gemessen. Es ist damit die Zweiwegmessung möglich. Da auch diese Technologie bereits bekannt ist, beispielsweise in "Real Time Location Systems (RTLS), einer Firmenpublikation der Fa. Nanotron Technologies, Berlin, beschrieben ist, sei dazu auf die einschlägige Literatur verwiesen.

Die Positionsmeldung der einzelnen Konten 8 kann periodisch und/oder bei Bewegung des Objektes 2 erfolgen. In letzterem Fall kann beispielsweise auf dem Objekt 2 oder im bzw. am Sende- und Empfangsmodul 4 ein Bewegungs- und/oder Beschleunigungssensor angeordnet sein. Durch letzteren kann z.B. ein ruckartiges Beschleunigen oder Abbremsen, z.B. in Folge eines Unfalls, festgestellt werden und die Position, insbesondere sofort, übermittelt werden

Selbstverständlich können diese beiden genannten Technologien auch in nicht chipförmigen Sende- und Empfangsmodulen 4 verwendet werden.

Das Sende- und Empfangsmodul 4, insbesondere der Chip 11, ist bevorzugt energieautark ausgebildet. Dazu kann in dem Sende- und Empfangsmodul bzw. dem Chip 11 zumindest ein Energieversorgungselement 14 angeordnet sein. Dieses Energieversorgungselement 14 kann beispielsweise ein piezoelektrisches Element und/oder ein thermoelektrisches Element bzw. eine Foto- oder Solarzelle sein. Es kann also durch Vibrationen oder über Temperaturunterschiede nach dem Pelltier-Effekt bzw. durch Sonneneinstrahlung elektrische Energie gewonnen werden. Auch der Temperaturunterschied zwischen der Körpertemperatur eines Tieres und der Umgebungstemperatur des Tieres kann zur Energiegewinnung ausgenutzt werden. Die elektrische Energie, die für das Senden und Empfangen von Daten benötigt wird, wird also vor Ort direkt erzeugt. Gegebenenfalls ist es auch möglich, dass das Sende- und Empfangsmodul 4 bzw. der Chip 11 mit einer Batterie oder mit einer Stützbatterie, wenn die Energieversorgung vor Ort zeitweise zu gering ist, ausgerüstet ist.

Für diese energieautarke Ausführung des Sende- und Empfangmoduls 4 bzw. des Chips 11 haben sich insbesondere die beiden oben genannten Technologien, das heißt das CSS-Element 12 und das SDS-TWR-Element 13, als besonders vorteilhaft herausgestellt aufgrund deren geringen Stromverbrauchs.

Das Sende- und Empfangsmodul 4 bzw. der Chip 11 können weiters zumindest ein Speicherelement 15 aufweisen, um darin entsprechende Daten, wie beispielsweise Vitalfunktionen oder Daten zur Fütterung von Tieren, zu speichern. Es sind damit diese Daten ständig am jeweiligen Objekt 2 verfügbar, sodass diese also nicht aus der Basisstation 6 ausgelesen werden müssen, sondern beispielsweise mit einem mobilen Lesegerät, bzw. einem Lesegerät das ortsfixiert ist, beispielsweise in einer Fütterungsbox für Tiere angeordnet ist, ausgelesen werden können. Von Vorteil ist dabei auch, wenn das Lesegerät an einer Einrichtung lokalisiert ist, die alle Objekte passieren müssen.

Zur Lagebestimmung eines Objektes 2 kann entweder der Zentralankerknoten 9 als Fixknoten (Nullpunkt) innerhalb des Raumes 3 mit genau definierten Koordinaten bestimmt werden bzw. besteht auch die Möglichkeit, dass dieser Zentralankerknoten 9 von außerhalb beispielsweise von der Basisstation 6 für die Messung als solcher bestimmt wird, sodass also ein Knoten 8 für diesen Zweck zum Zentralankerknoten 9 bestimmt wird, um damit die relative Lage der weiteren Objekte 2 zu diesem Zentralankerknoten 9 zu bestimmen. Es besteht dann weiters die Möglichkeit, dass zumindest eines der weitem Objekte 2 bzw. der weiteren Sende-und Empfangsmodule 4 als so genannte Ankerknoten 10 bestimmt werden, welche eine definierte relative Position zum Zentralankerknoten 9 einnehmen. Die Einmessung dieses Ankerknotens 10 kann automatisch über den Zentralankerknoten 9 veranlasst werden. Selbstverständlich besteht die Möglichkeit, dass mehrere Objekte 2 zum Ankerknoten 10 bestimmt werden. In weiterer Folge wird durch Aussenden von Funksignalen bzw. elektromagnetischen Wellen und durch das Empfangen der entsprechenden Daten die Lage, das heißt die Koordination der einzelnen Objekte 2 bestimmt. Erfindungsgemäß kann prinzipiell jedes Objekt 2 bzw. jedes Sende- und Empfangsmodul 4 zum Ankerknoten 10 werden oder als zu bestimmendes Objekt 2 geführt sein. Damit ist das erfindungsgemäße System 1 äußerst variabel hinsichtlich der Gestaltung des Raumes 3. Es ist somit nicht erforderlich, diesen Raum 3 vor dem Einbringen der Objekte 2 in diesen Raum 3 zu vermessen.

Selbstverständlich ist es möglich, dass die Sende- und Empfangsmodule 4 jeweils mit Sensoren, die an dem Objekt 2 angebracht sind, zu verbinden um beispielsweise biometrische Daten zu bestimmen. Ebenso können physikalische Werte wie zum Beispiel die Temperatur, die Luftfeuchtigkeit, etc., oder aber auch Fütterungswerte von Tieren, beispielsweise Fütterungsdauer, Zeitspanne zwischen den Fütterungen, Futterzusammensetzung, gemessen werden. Es ist auch möglich, dass bei freier Futterwahl, also wenn mehrere Stationen mit unterschiedliche Futterzusammensetzungen vorhanden sind, aus den Daten Rückschlüsse auf die von bestimmten Tieren bevorzugte Futterzusammensetzung gezogen werden.

Es sei an dieser Stelle erwähnt, dass, wenn das Futter frisch gemischt wird, aus den Daten von dem Speicherelement 15 die jeweilige zur Verfügung zu stellende Futterzusammensetzung, insbesondere unmittelbar nach dem Auslesen der Daten, hergestellt und dem Tier zur Verfügung gestellt wird.

Es besteht weiters die Möglichkeit, dass die Sende- und Empfangsmodule 4 periodisch untereinander und/oder mit der Basisstation 6 kommunizieren oder nur nach Anlassfall durch Anfrage der Basisstation 6 und/oder des Zentralankerknotens 9 bzw. eines Ankerknotens 10.

Zur Unterscheidung der einzelnen Objekte sind die einzelnen Sende- und Empfangsmodule 4 unterschiedlich adressiert. Daneben können die Sende- und Empfangsmodule 4 zur besseren visuellen Identifikation farblich und/oder alphanumerisch codiert sein.

Das System weist weiters den Vorteil auf, dass innerhalb des Raumes 3 überall die Position von Objekten 2 ermittelt werden kann, auch wenn die Basisstation 6 von diesem Objekt bzw. dessen Sende- und Empfangsmodul 4 nicht erreichbar ist. Für diesen Fall können die Daten über mehrere Knoten 8 an die Basisstation 6 weitergereicht werden.

Es können damit beispielsweise auch die Positionen "freilaufender" Tiere in geschlossenen Räumen 3, wie Stallgebäuden, ermittelt werden, ohne dass die Tiere gewisse Punkte im Stall passieren müssen, wie dies bei Systemen nach dem Stand der Technik der Fall ist. Die Sende-und Empfangsmodule 4 können dabei so programmiert sein, dass, sobald sich ein Tier in einem definierten Bereich befindet, das Sende- und Empfangsmodul 4 automatisch Informationen an die Basisstation 6 übermittelt. Zum Beispiel können Tiere, welche sich in einem Selektionsraum befinden, periodisch ihre Position senden. Somit kann immer die Anzahl der Tiere im Selektionsraum, auch wenn Tiere aus Versehen selektiert wurden, überwacht werden. Es kann damit auch erreicht werden, dass sich Tiere gegenseitig verletzen, indem vermieden wird, dass sich zu viele Tiere in einem Raum bestimmter Größe befinden, beispielsweise in einer Selktionsbox.

Des Weiteren können die Sende- und Empfangsmodule 4 so programmiert werden, dass, wenn sich ein Tier über einen gewissen Zeitraum nicht bewegt, eine Alarmmeldung an die Basisstation 6 übermittelt wird. Die Sende- und Empfangsmodule können sich bei der Basisstation 6 auch selbstständig melden, wenn gewisse Grenzwerte bei Sensoren erreicht oder überschritten werden. Die jeweiligen Referenzknoten, sei es der Zentralankerknoten 9 oder die Ankerknoten 10, benötigen keine direkte Verbindung mit der Basisstation 6, da eine derartige Weiterleitung auch über die normalen Knoten 8 erfolgen kann.

Es können auch Grenzen des Raumes 3 auf den mobilen Knoten 8 gespeichert werden und können diese in der Folge automatisch das Übertreten der Grenze an die Basisstation 6 melden.

Nachdem die Referenzknoten nicht miteinander kommunizieren müssen, sind damit höhere Reichweiten und eine Vergrößerung des Raumes 3 mit dem erfindungsgemäßen System 1 möglich.

Das System 1 kann nicht nur dazu verwendet werden um Objekte 2 zu lokalisieren, sondern auch dazu, bestimmte Positionen innerhalb eines Raumes 3 zu überwachen, um Informationen zu Veränderungen, wie beispielsweise der Temperatur, Luftfeuchtigkeit, etc., an dieser Position überwachen zu können. Das System 1 bzw. die Sende- und Empfangsmodule können also als "mobile Sensoren" verwendet werden.

Neben der Lokalisation von Objekten ist auch die Mitverfolgung der Wanderung dieser Objekte 2 im Raum 3 mit dem System 1 möglich.

Im Vergleich zu bekannten GPS-Systemen weist das System 1 in der Ausbildung mit Funksensoren den Vorteil auf, dass ein Empfang auch in geschlossenen Räumen, wie im Wald, in einem Tunnel, etc. ungestört möglich ist und zudem diese bei Verwendung der angesprochenen Technologien energieschonend betrieben werden können.

Das System kann beispielsweise in der Lagerhaltung angewandt werden, um damit Lagerplätze zu lokalisieren bzw. Waren innerhalb des Lagers zu lokalisieren, aber auch um Lagerarbeiter zielgenau zu den jeweiligen Waren bzw. Objekten 2 zu navigieren. Insbesondere kann das System 1 also auch bei der Navigation von automatischen Staplern eingesetzt werden.

Sofern die Lagerstellflächen mit Wiegezellen ausgerüstet sind, ist somit ein Echtzeitlagerstand jederzeit abfragbar. Die Warenentnahme erfolgt dabei nach Gewicht und nicht durch Zählen.

Das System 1 kann erfindungsgemäß zur Unfalldetektion eingesetzt werden. Beispielsweise können beim Schifahren, nachdem immer häufiger Fahrerflucht auf Schipisten nach Unfällen begangen wird, die jeweiligen Ortungen der einzelnen Personen aufgezeichnet werden. Durch die Abstandsmessung können also die letzten Kontakte mit dem verunfallten Schifahrer aufgezeichnet und ausgewertet werden, sodass aus diesen Daten auf den Schifahrer, der am nächsten beim verunfallten Schifahrer vor dem Unfall war, rückgeschlossen werden kann. Dazu kann beispielsweise der Chip 11 in die Liftkarte integriert werden. Es ist damit auch die Pistenbelegung feststellbar.

Aber auch zur Auffindung von Menschen, die von Lawinen verschüttet wurden, kann das System 1 verwendet werden. Da ein Sende- und Empfangsmodul 4 sowohl Ankerknoten 10 als auch zu ortender Knoten 8 sein kann, kann während des Betriebes des Systems 1 entschieden werden, welches Sende- und Empfangsmodul 4 Ankerknoten 10 ist und welche Knoten 8 lokalisiert werden sollen. Nachdem nur ein Zentralankerknoten 9 als Fixknoten fixiert werden muss, können alle anderen Ankerknoten 10 automatisch in das System eingemessen. Dazu kann der Zentralankerknoten 9 dynamisch alle nicht verschütteten Mitglieder, die sich in bestimmten Positionen zueinander aufstellen, zu Ankerknoten 10 umschalten und lediglich die verschütteten Knoten 8 bleiben als solche Bestehen. Mit dem erfindungsgemäßen Systems 1 kann in weiterer Folge die Position, das heißt es können die (relativen) Koordinaten der verschütteten Knoten 8 somit ermittelt werden, ohne dass das betroffene Gebiet sondiert werden müsste.

Auch zur Orientierung bei Sichtbehinderung, beispielsweise in Form von Rauch und Nebel, kann das System 1 verwendet werden, beispielsweise von der Feuerwehr. Dabei ist es möglich über das System 1 Daten, zum Beispiel bezüglich Sauerstoff, Puls oder Umgebungstemperatur, an die Basisstation 6 weiterzuleiten. Es ist aufgrund des Echtzeit-Ortungssystems jederzeit möglich, die einzelnen Feuerwehrmänner zu orten. Gegebenenfalls können auch Videodaten über das System 1, das heißt die Sende- und Empfangsmodule 4, an die Basisstation 6 übermittelt werden.

Generell können auch Arbeitsprozesse an sich überwacht werden, beispielsweise indem Arbeitsabläufe aufgezeichnet werden und in weiterer Folge ausgewertet wird, in welchen Bereichen Zeit verloren wird.

Des Weiteren besteht die Möglichkeit, dass System 1 im so genannten Bestandmanagement einzusetzen, z.B. in einem Krankenhaus, um festzustellen welches Fachpersonal sich wo befindet bzw. wo sich welcher Patient befindet. Es können aufgrund dieser Daten die schnellsten Wege bei einem Notfall zum Patienten bzw. zum Objekt 2 ermittelt werden.

Dies gilt auch in der Anwendung bei Kongressen, beispielsweise um Kongressteilnehmer finden zu können. Dazu kann jeder Kongressteilnehmer ein mobiles Gerät, das Sende- und Empfangsmodul 4, ausgehändigt bekommen. Sofern dieses Sende- und Empfangsmodul 4 mit einem mobilen PC verbunden ist, können damit auch Informationen ausgetauscht werden.

Auch Zutrittskontrollen bzw. Zeiterfassungen sind über das System 1 möglich. Z.B. können Zeitaufzeichnungen von Arbeitern, welche vom Arbeitgeber nicht oder nur sporadisch kontrolliert werden, nachkontrolliert werden, indem ausgewertet wird, wie lange sich ein Arbeiter (z.B. ein Greenkeeper) an einem bestimmten Ort aufgehalten hat.

Es können mit dem System 1 auch Abrechungen im Bereich der Dienstleistung durchgeführt werden, indem die Zeitdauer aufgezeichnet wird, in der ein Dienstleister an einem bestimmten Ort war. Beispielsweise kann aus der Abstandsmessung bestimmt werden, wie lange ein Dienstleister, z.B. ein Arzt, bei einem Kunden, z.B. einem Patienten, war. Es kann damit also beispielsweise die Dauer einer Behandlung bestimmt werden.

Auch zur Überwachung der Sicherheit von Veranstaltungen kann das System 1 verwendet werden. Insbesondere kann damit festgestellt werden, wo sich das Sicherheitspersonal befindet bzw. welches Sicherheitspersonal unmittelbar neben dem Problemherd ist. Wiederum kann damit das Sicherheitspersonal hinsichtlich des Status, also beispielsweise des Pulses etc., überwacht werden. Es ist daher auch eine Kommunikation mit dem Sicherheitspersonal bzw. Übertragung von Videodaten möglich.

Das System 1 eignet sich generell in der Gruppenüberwachung, also neben den angesprochenen Schitourengehern, auch bei Bergwanderungen, Fahrradtouren, Reitergruppen, Kindergruppen, etc.

Ebenso kann im Bergbau das System 1 zur Überwachung von Umgebungwerten und zur schnellstmöglichen Alarmierung im Bedarfsfall eingesetzt werden und kann damit auch sichergestellt werden, dass sich niemand mehr in der Gefahrenzone befindet bzw. kann die Rettung effektiver erfolgen.

Generell kann das System 1 zur insbesondere periodischen Überwachung von Menschen in Gefahrenzonen bzw. gefährlichen Bereichen verwendet werden. Dazu kann die Bewegungsaktivität oder können biometrische Daten, wie z.B. der Puls bzw. die Pulsfrequenz, überwachte werden und bei Bedarf ein Alarm ausgelöst werden. Es können dazu am Objekt, also beispielsweise am Menschen selber oder an dem Sende- und Empfangsmodul 4, entsprechende Sensoren, wie z.B. Bewegungssensoren, Beschleunigungssensoren, angebracht sein, sodass der Alarm ausgelöst werden kann, wenn sich das Objekt nicht mehr bewegt.

Das System 1 ist günstig in der Anschaffung, günstig im Betrieb, vorzugsweise energieautark, nahezu wartungsfrei, einfach erweiterbar, benutzerfreundlich und kann mit entsprechender Software beliebig programmiert werden.

Das Ausführungsbeispiel zeigt eine mögliche Ausführungsvariante des Systems 1.

Der Ordnung halber sei abschließend darauf hingewiesen, dass zum besseren Verständnis des Aufbaus des Systems 1 dieses bzw. dessen Bestandteile teilweise unmaßstäblich und/oder vergrößert und/oder verkleinert dargestellt wurden.

### Bezugszeichenaufstellung

- 1: System
- 2: Objekt
- 3: Raum
- 4: Sende- und Empfangsmodul
- 5: Doppelpfeil

- 6: Basisstation
- 7: Doppelpfeil
- 8: Knoten
- 9: Zentralankerknoten
- 10: Ankerknoten

- 11: Chip
- 12: CSS-Element
- 13: SDS-TWR-Element
- 14: Energieversorgungselement
- 15: Speicherelement

## Patentansprüche

1. Verwendung eines Systems (1) zur Lagebestimmung eines Objektes (2) in Echtzeit innerhalb eines Raumes (3), in dem sich eine Mehrzahl an Objekten (2) befinden, wobei das System (1) eine Mehrzahl an Sende-und Empfangsmodulen (4) aufweist, wobei jedes Objekt (2) mit einem Sende- und Empfangsmodul (4) versehen ist, und die Sende- und Empfangsmodule (4) zu einem drahtlosen Netzwerk verbunden sind, und wobei zumindest eines der Sende- und Empfangsmodule (4) einen Zentralankerknoten (9) mit definierter Lage bildet, und die restlichen Sende- und Empfangsmodule (4) zu ortende Knoten (8) sind, und mit einer Basisstation (6), an die Daten von den Sende-und Empfangsmodulen (4) übermittelt werden, und wobei jedes der Sende-und Empfangsmodule (4) von einem zu ortenden Knoten (8) in einen zusätzlichen Ankerknoten (10) mit definierter Lage schaltbar ist,
**dadurch gekennzeichnet, dass**
es zur Detektion des Unfallherganges beim Skifahren auf Skipisten verwendet wird, dass dazu Sende- und Empfangsmodule (4) von skifahrenden Personen mitgeführt werden, dass Ortungen der mitgeführten Sende- und
Empfangsmodule (4) aufgezeichnet werden und dass nach einem Unfall einer skifahrenden Person an Hand der aufgezeichneten Daten durch Abstandsmessungen auf die letzten Kontakte der verunfallten skifahrenden Person zu anderen skifahrenden Personen rückgeschlossen wird.

2. Verwendung des System nach Anspruch 1 **dadurch gekennzeichnet, dass** die Liftkarten der skifahrenden Personen mit einem Sende- und Empfangsmodul (4) ausgestattet sind.

## Claims

1. Use of a system (1) to determine the position of an object (2) in real-time within an area (3) in which numerous objects (2) are located, whereby the system (1) has numerous transmitter and receiver modules (4), whereby each object (2) has a transmitter and receiver module (4) and the transmitter and receiver modules (4) are connected to a wireless network, whereby at least one transmitter and receiver module (4) forms a central anchor node (9) with a defined position and the remaining transmitter and receiver modules (4) form locatable nodes (8), and use of a base station (6) where data is transferred from the transmitter and receiver modules (4), whereby each of the transmitter and receiver modules (4) can be switched from being a locatable node (8) to being an additional anchor node (10) with a defined position.
The system is **characterised in**
**that** it is used for detecting accident circumstances for skiers on ski slopes, that the transmitter and receiver modules (4) are carried with skiers, that the location of the carried transmitter and receiver modules (4) is recorded and that after an accident with a skier, using the recorded data, the last contacts of the skier who had the accident with other skiers can be determined through distance measurements after the event.

2. Use of the system in Claim 1 is **characterised in that** the lift passes of the skiers are equipped with a transmitter and receiver module (4).

## Revendications

1. Utilisation d'un système (1) pour localiser un objet (2) en temps réel dans un espace (3) dans lequel se trouve une pluralité d'objets (2), le système (1) présentant une pluralité de modules émetteurs et récepteurs (4), chaque objet (2) étant muni d'un module émetteur et récepteur (4), les modules émetteurs et récepteurs (4) étant raccordés à un réseau sans fil et au moins un des modules émetteurs et récepteurs (4) formant un noeud d'ancrage central (9) avec une position définie, les autres modules émetteurs et récepteurs (4) étant des noeuds à localiser (8), et comprenant une station de base (6) à laquelle sont transmises les données des modules émetteurs et récepteurs (4), chacun des modules émetteurs et récepteurs (4) pouvant passer du statut de noeud à localiser (8) à noeud d'ancrage supplémentaire (10) avec une position définie,
**caractérisée en ce que**
le système est utilisé pour comprendre le déroulement d'un accident lors de la pratique de ski sur pistes, **en ce que** les skieurs emmènent avec eux les modules émetteurs et récepteurs (4), **en ce que** la localisation des modules émetteurs et récepteurs emmenés (4) est consignée et **en ce qu'**après un accident d'un skieur, il est déduit à l'aide des données consignées par le biais de mesures de distance les derniers contacts du skieur accidenté avec d'autres skieurs.

2. Utilisation du système selon la revendication 1, **caractérisée en ce que** les forfaits des skieurs sont munis d'un module émetteur et récepteur (4).
